# NEUE EUROPÄISCHE PATENTSCHRIFT

(11) **EP 0 285 868 B2**
(45) Veröffentlichungstag und Bekanntmachung des Hinweises auf die Entscheidung über den Einspruch: **08.11.1995**
(45) Hinweis auf die Patenterteilung: 23.01.1991
(21) Anmeldenummer: 88104114.9
(22) Anmeldetag: 15.03.1988
(51) Int. Cl.: F02D 11/10, H02P 8/00

(54) **Einrichtung zur Steuerung der Ansaugluft in einer Brennkraftmaschine**
Device for regulating the intake air in a combustion engine
Dispositif de commande de l'air d'admission d'un moteur à combustion

(30) Priorität: 09.04.1987 DE 3711972
(43) Veröffentlichungstag der Anmeldung: 12.10.1988
(73) Patentinhaber: SIEMENS AKTIENGESELLSCHAFT, 80333 München (DE)
(72) Erfinder: Eisenmann, Manfred, Dipl.-Ing., D-8714 Wiesentheid (DE); Schreiber, Hans, Dipl.-Ing., D-8411 Lappersdorf (DE)

(56) Entgegenhaltungen:
- WO-A-82/02962
- DE-A- 3 539 259
- DE-B- 1 763 156
- JP-A- 5 812 592
- JP-A-58 176 442
- JP-B- 6 056 075
- JP-U- 6 082 538
- US-A- 4 245 599
- US-A- 4 378 768
- US-A- 4 523 138
- VDO QUERSCHNITT, Nr. 4, März 1981, Seiten 1-19, A. Schindling AG, Frankfurt, DE; "Intelligente Regelung in der Motor-Peripherie"
- Gerhard Kolberg ELEKTRONISCHE MOTORSTEUERUNG FÜR KRAFTFAHRZEUGE in MTZ 46 (1985), Seiten 129 - 131
- Lehrbuch "I.C. (Integrierte Schaltungen zum Steuern eines Kleinmo- tors)" (deutsche Übersetzung des japanischen Titels), Kogyo Chosakai Publ. Co. Ltd, Tokyo 1986, Seiten 72 - 75 und 134 - 141
- Lehrbuch "Theorie und Anwendung von Schrittmotoren" (deutsche Über- setzung des japanischen Titels), H. Ooki, Jitsukyo Shuppan K.K., Tokyo 1986, Seiten 148 - 153
- Lehrbuch "Grundlagen und Anwendung von Schrittmotoren" (dt. Über- setzung des japanischen Titels), Sokai Denshi Shuppansha, Tokyo 1979, Seiten 52 - 55

## Beschreibung

Einrichtung zur Steuerung der Ansaugluft in einer Brennkraftmaschine.

Die Erfindung betrifft eine Einrichtung zur Steuerung der Ansaugluft einer Brennkraftmaschine gemäß Oberbegriff von Anspruch 1.

Eine solche Einrichtung ist aus der Zeitschrift "Querschnitt" (Hrsg. VDO Adolf Schindling AG, März, 1981) bekannt. Dort ist für den Leerlaufbetrieb ein zusätzliches Stellglied in einem Bypaß zur Drosselklappe vorgesehen, das er ermöglicht, Schwankungen der Leerlaufdrehzahl in dem geforderten Rahmen zu halten.

In der US―A―4378768 ist eine Leerlaufdrehzahlregelung beschrieben, wobei als Stellglied ein Durchflußventil im Bypaß zur Drosselklappe dient, das von einem Schrittmotor verstellt wird.

Gemäß der WO―A―8202962 wird zum Antrieb eines Meßwertaufzeichnungsgeräts für Oszillographen ein Schrittmotor verwendet. Ein Mikroprozessor steuert den Schrittmotor mit verschiedenen Geschwindigkeiten. Zur Feinjustierung ist dabei ein Mikro- oder Feinschrittbetrieb vorgesehen.

Aus dem JP-U-60 82 538 ist es ferner bekannt, eine Drosselklappe mittels eines Schrittmotors anzutreiben und diesen bei pedalabhängigem Betrieb zwecks hoher Verstellgeschwindigkeit in Grobschritten und bei Leerlaufregelung zwecks hoher Auflösung in kleineren Feinschritten anzusteuern. Die Umschaltung ist dabei ausschließlich von der Ruhestellung des Gaspedals abhängig mit entsprechenden Nachteilen für den Übergang zwischen den beiden Betriebszuständen.

Der Erfindung liegt die Aufgabe zugrunde, eine Einrichtung der in "Querschnitt" genannten Art so weiterzubilden, daß sich die Anforderungen an die Steuerung der Ansaugluft im Fahrbetrieb―hohe Stellgeschwindigkeit―und im Leerlaufbetrieb―hohe Auflösung―mit einem einzigen Stellglied erfüllen lassen.

Die erfindungsgemäße Lösung dieser Aufgabe ist in Anspruch 1 gekennzeichnet. Danach dient die Drosselklappe in Verbindung mit einem direkt gekuppelten Schrittmotor zur Steuerung der Ansaugluft im Fahrbetrieb und im Leerlaufbetrieb.

Die Erfindung kommt ohne zusätzliches Getriebe aus; damit entfallen alle mit einem Getriebe verbundenen Probleme (z.B. Alterung der Schmiermittel und davon abhängige Änderung der Motorlast; erhöhtes Massenträgheitsmoment). Vor allem kann auch die Rückstellfeder wesentlich schwächer ausgebildet sein, was wiederum einen schwächeren Motor und bessere dynamische Eigenschaften ermöglicht.

Der Schrittmotor wird im Grobschritt- und Feinschrittbetrieb gesteuert. Je nach Ausführung des Schrittmotors kann der Grobschritt ein Vollschritt oder ein Teilschritt sein; in vorliegendem Fall wird ein zweiphasiger Schrittmotor mit einer Vollschrittweite von 1,8° in Grobschritten zu 0,45°, also in Viertelschritten gesteuert.

Erfahrungsgemäß führt bereits eine Lageänderung der Drosselklappe um 0,02° zu einer Drehzahländerung von etwa 10 Umdrehungen pro Minute. Eine Auflösung des gesamten Stellbereiches der Drosselklappe von etwa 90° in Feinwinkel zu 0,02° ist jedoch mit einem Stellungsgeber mit vertretbarem Aufwand nicht realisierbar. Der Erfindung liegt die Einsicht zugrunde, daß im Leerlaufbetrieb auf eine Lagerückmeldung verzichtet und ohne Lageregelkreis gearbeitet werden kann, da es hierbei auf eine genaue Einstellung der absoluten Winkellage der Drosselklappe nicht ankommt. Vielmehr sorgen die Drehzahlregelmittel für eine solche Einstellung der Drosselklappe, daß die Leerlaufdrehzahl innerhalb der gesetzten Grenzen bleibt. Dazu muß allerdings die Drosselklappe um Feinschritte von 0,02° verstellbar sein; diese Forderung ist aber durch die Auswahl eines entsprechenden Schrittmotors sowie den Aufbau der Drehzahlregelmittel und der Stelleinrichtung für die Ströme durch die Erregerwicklungen des Schrittmotors erfüllbar.

Gemäß der Erfindung ist der Übergang zwischen Steuerung in Grobschritten und in Freinschritten von der Größe des Differenzsignals am Eingang des Lageregelkreises abhängig. Da der Lageregelkreis nur im Grobschrittbetrieb geschlossen ist, kommt man dafür mit einem Stellungsgeber aus, dessen Auflösung gleich der Größe eines Grobschrittes ist. Ein solcher läßt sich mit vertretbarem Aufwand realisieren: Es genügt ein einfacher Drehwiderstand, dessen stellungsabhängige Analogspannung über einen Analogdigitalwandler in einen digitalen Lageistwert mit G Grobstellen umgesetzt wird, wobei G so gewählt ist, daß die letzte Stell―LSB-Stell―während jedes Grobschrittes des Schrittmotors eine Wertänderung erfährt. Durch jede solche Wertänderung wird dann der Feldvektor um einen Grobschritt verstellt. Dadurch ist im Grobschrittbetrieb stets eine optimale Beschleunigung bzw. Abbremsung ohne Rücksicht auf Schwankungen der Betriebsparameter, wie Versorgungsspannung oder Belastung des Schrittmotors, erzielbar. Damit läßt sich die im Fahrbetrieb nötige hohe Verstellgeschwindigkeit erreichen.

Im Rahmen der Erfindung ist es vorteilhaft, den Stellungsgeber und den Schrittmotor so zu kuppeln, daß zwischen der Position des Rotors des Schrittmotors bei einer Wertänderung des LSB-Stelle des Lageistwertes und der benachbarten Rastposition eines Grobschrittes ein Abstandswinkel liegt. Dieser wird zweckmäßig gleich der Hälfte eines Grobschrittes gewählt, weil sich dann für Beschleunigungs- und Bremsbetrieb gleiche Verhältnisse ergeben.

Weitere vorteilhaft Ausgestaltungen der Erfindung sind in den Unteransprüchen gekennzeichnet.

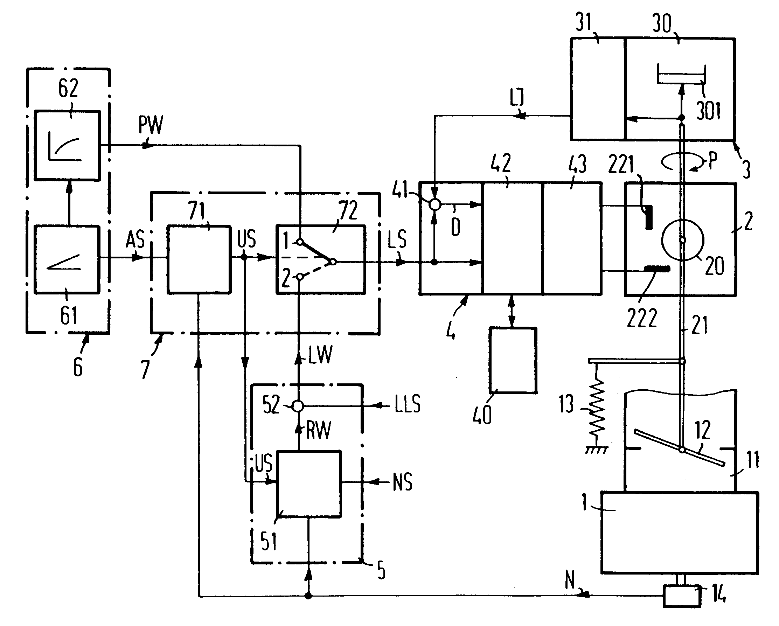

Die Erfindung wird anhand eines in der Figur dargestellten Ausführungsbeispiels näher beschrieben:

In dem Ansaugrohr 11 einer Brennkraftmaschine 1 ist eine Drosselklappe 12 drehbar gelagert; sie sitzt direkt auf der Welle 21 des Rotors 20 eines Schrittmotors 2. Mit der Welle 21 gekuppelt ist ein Stellungsgeber 3 und eine Rückholfeder 13, die die Drosselklappe 12 entgegen der Pfeilrichtung P in eine Schließstellung dreht, wenn der Schrittmotor 2 kein Drehmoment ausübt.

Der Schrittmotor 2 ist zweiphasig mit Ständerwicklungen 221, 222 ausgebildet. Diese erzeugen einen Feldvektor, dessen Lage und Größe von den Strömen durch die Feldwicklungen abhängt. Die Ströme werden von einer Stelleinrichtung 43 geliefert, die Teil eines Lagereglers 4 ist, und die es ermöglicht, den Feldvektor in Grob- oder Feinschritten weiterzuschalten.

Der Stellungsgeber 3 besteht aus einem Analoggeber 30 und einem Analogdigitalwandler 31 mit G (gleich 7) Stellen, die als Grobstellen bezeichnet werden. Der Analoggeber 30 enthält im wesentlichen einen Drehwiderstand 301, dessen Abgriff mit der Welle 21 des Schrittmotors 2 gekuppelt ist und eine Analogspannung liefert, deren Größe von der Winkellage der Drosselklappe 12 abhängt. Die sieben Grobstellen des Analogdigitalwandlers 31 ergeben eine Auflösung des gesamten Stellbereiches Y der Drosselklappe von etwa 90° in Teilwinkel zu 0,45°, entsprechend einem Grobschritt des Schrittmotors 2. Bei jeder Änderung der Lage der Drosselklappe um einen Grobschritt ergibt sich somit eine Wertänderung an der LSB-Stelle des digitalen Lageistwertes LI, der von dem Analogdigitalwandler 31 geliefert wird.

Der Abgriff des Drehwiderstandes 301 des Analoggebers 30 ist mit der Welle 21 des Schrittmotors 2 so gekuppelt, daß diese Wertänderung dann auftritt, wenn sich der Rotor gerade in der Mittel zwischen den Rastlagen aufeinanderfolgender Grobschritte befindet.

Zum Lageregler 4 gehört ein Addierglied 41, dem der Lageistwert LI und ein Lagesollwert LS zugeführt werden und das aus beiden ein digitales Differenzsignal D bildet, das einem Steuerteil 42 des Lagereglers 4 zugeführt wird. Der Steuerteil 42 erhält ferner den Lagesollwert LS und wandelt das Differenzsignal D bei jeder Änderung des Lagesollwertes LS in eine optimale Schrittfolge von Grob- und Feinschritten um und führt diese Schrittfolge mittels der Stelleinrichtung 43 aus bis durch einen neuen Lagesollwert LS eine neue Schrittfolge ausgelöst wird.

Zur Bestimmung jeder Schrittfolge kann sich der Steuerteil 42 eines Speichers 40 bedienen, in dem für jedes Differenzsignal die optimale Anzahl von Grobschritten im Antriebsbetrieb, von Grobschritten im Bremsbetrieb und von restlichen Feinschritten für jede Drehrichtung (mit bzw. gegen Rückstellfeder 13) abgespeichert sind. Der Aufbau der Stelleinrichtung 43 zur Umsetzung der Schrittfolgen in Ströme durch die Erregerwicklung 221, 222 gehört zum Stand der Technik (Siemens Components 24, 1986, Heft 5, Seiten 186―193).

Der maximal zulässige Lastwinkel, bei dem sich optimale Beschleunigungs- und Bremsverhältnisse ergeben, beträgt zwei Vollschritte entsprechend vier Grobschritten. Um diese Bedingung einzuhalten, stellt der Steuerteil 42 zur Ausführung eines Grobschrittes den Feldvektor gegenüber dem Rotor zunächst um 6,5 Grobschritte vor. Sobald der Rotor dem Feldvektor soweit gefolgt ist, daß an der LSB-Stelle des Lageistwertes LI eine Wertänderung auftritt, wird über das Steuerteil 42 und die Stelleinrichtung 43 der Feldvektor wieder um einen halben Grobschritt weitergeschaltet; der Lastwinkel hat in diesem Ausgenblick jeweils den maximal möglichen Wert von 7,5 Grobschritten. Dieser Vorgang wiederholt sich, bis alle Grobschritte im Antriebsbetrieb ausgeführt sind. Der Lastwinkel schwankt somit bei jedem Grobschritt zwischen 6,5 und 7,5 Grobschritten.

Beim Übergang vom Antriebs- in den Bremsbetrieb hält das Steuerteil 42 den Feldvektor fest und dieser wird von dem Rotor des Schrittmotors überholt Sobald dessen Position um 7,5 Grobschritte vor dem stationären Feldvektor liegt, wird durch die dann auftretende Wertänderung an der LSB-Stelle des Lageistwertes LI der Feldvektor wieder um einen Grobschritt weitergeschaltet wird: Der Feldvektor läuft jetzt dem Rotor nach, und zwar mit einem Bremswinkel, der zwischen 6,5 und 7,5 Grobschritten schwankt.

Der Lagesollwert LS liegt ebenfalls als binäre Zahl mit S Stellen vor, die in G Grobstellen und zusätzlich F Feinstellen unterteil sind. Die Zahl der Feinstellen ist so gewählt, daß sich jeder Grobschritt in Feinschritte zu 0,02° unterteilen läßt.

Der Lagesollwert LS wird von einer Steuereinheit 7 geliefert, die im wesentlichen eine Weiche 72 und einen Diskriminator 71 enthält, der die Weiche 72 zwischen zwei Schaltstellungen 1 und 2 steuert.

In der Schaltstellung 1 schaltet die Weiche einen Pedalwert PW als Lagesollwert LS durch. Dieser Pedalwert wird von einem Geberteil 6 geliefert, der aus einem Pedalwertgeber 61 und einem nachgeschalteten Kennfeldspeicher 62 besteht. Der Kennfeldspeicher 62 ordnet jeder Stellung des Pedalwertgebers 61 einen bestimmten Pedalwert PW zu. Außerdem liefert der Pedalwertgeber 61 ein Anschlagsignal AS, wenn sich der Pedalwertgeber 61 in Ruhestellung befindet.

In der Schaltstellung 2 schaltet die Weiche 72 einen Leerlaufwert LW als Lagesollwert LS durch, der von einem Drehzahlregler 5 geliefert wird. Dieser besteht im wesentlichen aus einem Regelverstärker 51 mit I-Verhalten, der eingangsseitig einen Drehzahlsollwert NS für die Leerlaufdrehzahl und einen Drehzahlwert N von einem Drehzahlgeber 14 erhält, der der Drehzahl der Brennkraftmaschine 1 proportional ist. Der Regelverstärker 51 integriert die Differenz dieser beiden Eingangsgrößen N und NS und liefert einen dementsprechenden digitalen Reglerwert RW.

Aus diesem Reglerwert RW und einem Leerlaufsollwert LLS bildet ein Addierglied 52 den Leerlaufwert LW. Der Leerlaufsollwert LLS bestimmt diejenige Stellung der Drosselklappe 12, die unter ungünstigsten Bedingungen die gewünschte Leerlaufdrehzahl ermöglicht. Da diese lastabhängig ist, die der Leerlaufsollwert LLS vorzugsweise eine Funktion von Parametern (Motorbelastung, Bordspannung), die sich auf die Leerlaufdrehzahl bei gegebener Stellung der Drosselklappe auswirken.

Der Diskriminator 71 in der Steuereinheit 7 erhält vom Pedalwertgeber 61 das Anschlagsignal AS und den Drehzahlwert N. Daraus bestimmt er, ob Fahrbetrieb oder Leerlaufbetrieb vorliegt und liefert ein entsprechendes Umschaltsignal US, durch das die Weiche 72 bei Fahrbetrieb in die gezeichnete Schaltstellung 1 und bei Leerlaufbetrieb in die Schaltstellung 2 gesteuert wird. Außerdem wird das Umschaltsignal dem Regelverstärker 51 zugeführt und bewirkt dort bei jedem Übergang vom Fahrbetrieb zum Leerlaufbetrieb ein kurzzeitiges Nullsetzen des Integralanteils des Reglerwertes RW.

Das Umschaltsignal US kann auch dazu dienen, den Lageistwert LI bei jedem Übergang vom Leerlaufbetrieb in den Fahrbetrieb abzuspeichern und als Leerlaufsollwert LLS vorzugeben:

Im Fahrbetrieb―Weiche 72 in der gezeichneten Schalterstellung 1―ist der Lagesollwert LS gleich dem vom Kennfeldspeicher 62 ausgegebenen Pedalwert PW und wird in der beschriebenen Weise durch den Lageregler 7 in eine entsprechende Stellung der Drosselklappe 12 umgesetzt. Dies gilt auch beim Freigeben des Pedalwertgebers 61, also beim Übergang in den Leerlautbetrieb. Hierbei kann das Differenzsignal D―je nach vorheriger Stellung der Drosselklappe 12―verhältnismaßig große Werte haben, so daß die Drosselklappe in Grobschritten mit einer Geschwindigkeit von 90° pro 100 Millisekunden gegen die Leerlauflage verstellt wird.

Sobald der Drehzahlwert N einen über der angestrebten Leerlaufdrehzahl liegenden Abfangwert erreicht hat, schaltet der Diskriminator 71 die Weiche 72 auf Schaltstellung 2 und setzt den Integralwert von RW auf Null. Daher ist der Lagesollwert LS zunächst bestimmt durch den Leerlaufsollwert LLS. Je nach Größe des Differenzsignals D zwischen diesem Wert LLS und dem Lageistwert LI arbeitet der Lageregler 4 im Grobschritt- oder Feinschrittbetrieb. Sofern hierbei der Drehzahlwert N der Brennkraftmaschine 1 von dem Drehzahlsollwert NS für die Leerlaufdrehzahl abweicht, bildet der Regelverstärker 51 einen Reglerwert RW, dessen Betrag mit der Differenz zwischen N und NS wächst und dessen Vorzeichen vom Vorzeichen dieser Differenz abhängt. Daraus resultiert ein Leerlaufwert LW, der bei großer Abweichung des Drehzahlwertes N von NS zunächst als Lagesollwert LS für den Lageregelkreis 2, 3, 4 dient, der die Drosselklappe 12 im Grobschrittbetrieb im Sinne der erwünschten Drehzahländerung verstellt. Wenn sich dadurch N und NS soweit angenähert haben, daß sich das Differenzsignal D zwischen dem Leerlaufwert LW und dem Lageistwert LI den Bereich der G Grobstellen nicht mehr ändert, dann blibt der Lageregelkreis offen und der Schrittmotor 2 wird mit dem Leerlaufwert LW als Stellgröße direkt im Feinschrittbetrieb gesteuert.

Der Steuerteil 42 überwacht auch die Funktionsfahigkeit von Schrittmotor und Drosselklappe: Wenn der Rotor der Verstellung des Feldvektors nicht in einer angemessenen Zeit folgt, ist dies ein Indiz für einen Fehler. Beispielsweise kann die Drosselklappe festgefroren sein. In diesem Fall läßt der Steuerteil den Feldvektor mit einer Frequenz rotieren, die der Resonanzfrequenz des mechanischen Systems benachbart ist; die dadurch verursachte Rüttelbewegung bricht die Drosselklappe frei.

Um das Verständnis der Erfindng zu erleichtern, wurden bei dem Ausführungsbeispiel die einzelnen Funktionsblöcke mit Bezeichnungen belegt, die für Hardwarebausteine üblich sind. Es ist aber für den Fachmann evident, daß ein Großteil dieser Funktionen am einfachsten mit einem entsprechend programmierten Mikrorechner realisierbar sind. Dies gilt insbesondere für die Funktion des Lagereglers 4, des Drehzahlreglers 5, der Steuereinheit 7 und des Analogdigitalwandlers 31. Das Wesentliche besteht dementsprechend nicht in der in der Figur dargestellten Hardwarestruktur sondern in der funktionellen Verknüpfung zwischen der Ausgangsgröße des Analoggebers 30, dem Drehzahlwert N, dem Pedalwert PW, dem Leerlaufsollwert LLS, dem Drehzahlsollwert NS und dem Anschlagsignal AS einerseits und den Strömen durch die Ständerwicklungen 221, 222 des Schrittmotors 2 andererseits.

## Patentansprüche

1. Einrichtung zur Steuerung der Ansaugluft einer Brennkraftmaschine,
mit einem Drehzahlgeber (14), der einen Drehzahlwert (N) liefert, der von der Drehzahl der Brennkraftmaschine abhängig ist, mit einer Drosselklappe (12), die mit einem Antriebsmotor (2), einer Rückstellfeder (13) und einem Stellungsgeber (3) mechanisch gekuppelt ist,
mit einem Lageregelkreis (2, 3, 4), der den Antriebsmotor (2) abhängig von einem Differenzsignal (D) steuern, das abhängig ist von einem Lageistwert (LI) des Stellungsgebers (3) und von einem Lagesollwert (LS), der im Fahrbetreb der Brennkraftmaschine vom Pedalwert (PW) eines Geberteiles (6) abhängt,
mit einem Stellglied für die Leerlaufdrehzahl, die im Leerlaufbetrieb der Brennkraftmaschine von einem Leerlaufwert (LW) abhängig ist, den Drehzahlregelmittel (5) abhängig von der Differenz zwischen dem Drehzahlwert (N) und einem Drehzahlsollwert (NS) für die Leerlaufdrehzahl bilden,
und mit Steuermitteln (7), die zwischen Fahrbetrieb und Leerlaufbetrieb der Brennkraftmaschine unterscheiden, dadurch gekennzeichnet,
daß der Antriebsmotor ein Schrittmotor (2) ist, wobei dessen Feldvektor in Grob- und Feinschritten angesteuert wird,
daß der Übergang zwischen Steuerung in Grobschritten und in Feinschritten von der Größe des Differenzsignales (D) anhängig ist,
daß die Drosselklappe (12) auch als Stellglied für den Leerlaufbetrieb dient und direkt auf der Welle (21) des Schrittmotors (2) angebracht ist,
daß der Lagesollwert (LS) für den Lageregelkreis (2, 3, 4) im Leerlaufbetrieb von dem Leerlaufwert (LW) der Drehzahlregelmittel (5) abhängig ist, wobei
- das Differenzsignal (D) in digitaler Form mit G Grobstellen und F Feinstellen vorliegt,
- im Lageregelkreis (2, 3, 4) aus den G Grobstellen die Zahl der auszuführenden Grobschritte und aus den F Feinstellen die Zahl der Feinschritte ermittelt werden,
- der Stellungsgeber (3) einen digitalen Lageistwert (LI) mit G Grobstellen liefert, wobei G so gewählt ist, daß die letzte Stelle―LSB-Stelle―während jedes Grobschrittes des Schrittmotors eine Wertänderung erfährt, und
- der Feldvektor durch den Lageregelkreis (2, 3, 4) durch jede solche Wertänderung um einen Grobschritt verstellt wird.

2. Einrichtung nach Anspruch 1, dadurch gekennzeichnet, daß der Stellungsgeber (3) und der Schrittmotor (2) so gekuppelt sind, daß zwischen der Position des Rotors (20) des Schrittmotors (2) bei einer Wertänderung der LSB-Stelle des Lageistwertes (LI) und der benachbarten Rastposition eines Grobschrittes ein Abstandswinkel liegt.

3. Einrichtung nach Anspruch 2, dadurch gekennzeichnet, daß der Abstandswinkel gleich der Hälfte eines Grobschrittes ist.

4. Einrichtung nach Anspruch 3, dadurch gekennzeichnet, daß der Schrittmotor (2) zweiphasig mit einer Vollschrittweite von 1,8° ausgebildet ist und die Größe eines Grobschrittes 0,45° und eines Feinschrittes von 0,02° beträgt.

5. Einrichtung nach Anspruch 1, dadurch gekennzeichnet, daß der Leerlaufwert (LW) von den Drehzahlregelmitteln (5) gleich ist der Summe aus einem Leerlaufsollwert (LLS) und einem Reglerwert (RW),
und daß der Reglerwert (RW) vom Integral der Differenz zwischen dem Drehzahlwert (N) und einem Drehzalsollwert (NS) für die Leerlaufdrehzahl abhängt.

6. Einrichtung nach Anspruch 5, dadurch gekennzeichnet, daß der Integralteil des Reglerwertes (RW) jeweils beim Übergang vom Fahrbetrieb auf den Leerlaufbetrieb auf Null gesetzt wird.

7. Einrichtung nach Anspruch 5, dadurch gekennzeichnet, daß jeweils beim Übergang vom Leerlaufbetrieb in den Fahrbetrieb der letzte Lageistwert (LI) als Leerlaufsollwert (LLS) abgespeichert wird.

8. Einrichtung nach Anspruch 1, dadurch gekennzeichnet, daß die Ausführung jedes Grobschrittes überwacht wird und daß zum Öffnen einer schwergängigen Drosselklappe eine Rotation de Feldvektors ausgelöst wird.

## Claims

1. Device for controlling the intake air of an internal combustion engine,
having a speed generator (14) that supplies a speed value (N) that is dependent on the speed of the internal combustion engine,
having a throttle valve (12) that is mechanically coupled to a drive motor (2), to a restoring spring (13) and to a displacement transducer (3),
having a position control circuit (2, 3, 4) that controls the drive motor (2) as a function of a difference signal (D) that is dependent on an actual position value (LI) of the displacement transducer (3) and on a setpoint position value (LS) that is dependent in the driving operation of the internal combustion engine on the pedal value (PW) of a generator part (6),
having a final control element for the idling speed that, in the idling operation of the internal combustion engine, is dependent on a no-load value (LW) formed by speed regulating means (5) as a function of the difference between the speed value (N) and a setpoint speed value (NS) for the idling speed,
and having control means (7) that discriminate between driving operation and idling operation of the internal combustion engine, characterised in that:
the drive motor is a stepping motor (2) whose field vector is controlled in rough and fine steps, and in that the transition between control in rough steps and in fine steps is dependent on the size of the difference signal (D).
the throttle valve (12) also serves as the final control element for idling operation and is directly attached to the shaft (21) of the stepping motor (2),
the setpoint position value (LS) for the position control circuit (2, 3, 4) is dependent in idling operation on the no-load value (LW) of the speed regulating means (5),
- the difference signal (D) being in digital form having G rough places and F fine places,
- the number of rough steps to be executed being determined in the position control circuit (2, 3, 4) from the G rough places and the number of fine steps being determined therein from the F fine places,
- the displacement transducer (3) supplying a digital actual position value (LI) having G rough places, G being selected such that the last place - the LSB place - undergoes a value change during each rough step of the stepping motor, and
- the field vector being adjusted by a rough step by the position control circuit (2, 3, 4) as a result of every such value change.

2. Device according to Claim 1, characterized in that the displacement transducer (3) and the stepping motor (2) are coupled such that a spacing angle lies between the position of the rotor (20) of the stepping motor (2) in the case of a value change of the LSB place of the actual position value (LI) and the neighbouring lock-in position of a rough step.

3. Device according to Claim 2, characterized in that the spacing angle is equal to half a rough step.

4. Device according to Claim 3, characterized in that the stepping motor (2) is fashioned as a two-phase stepping motor having a full step width of 1.8° and the size of a rough step amounts to 0.45° and the size of a fine step amounts to 0.02°.

5. Device according to Claim 1, characterized in that the no-load value (LW) of the speed regulating means (5) is equal to the sum of a setpoint no-load value (LLS) and a regulator value (RW),
and in that the regulator value (RW) is dependent on the integral of the difference between the speed value (N) and a setpoint speed value (NS) for the idling speed.

6. Device according to Claim 5, characterized in that the integral part of the regulator value (RW) is set to zero at each transition from driving operation to idling operation.

7. Device according to Claim 5, characterized in that the last actual position value (LI) is stored as setpoint no-load value (LLS) at each transition from idling operation to driving operation.

8. Device according to Claim 1, characterized in that the execution of each rough step is monitored and in that a rotation of the field vector is initiated in order to open a sluggish throttle valve.

## Revendications

1. Dispositif pour commander l'air d'admission d'un moteur à combustion interne, comportant
- un générateur tachymétrique (14), qui fournit une valeur (N) de la vitesse de rotation, qui dépend de la vitesse de rotation du moteur à combustion interne,
- un papillon des gaz (12), qui est couplé mécaniquement à un moteur d'entraînement (2), à un ressort de rappel (13) et à un capteur de position (3),
- un circuit de régulation de position (2,3,4), qui commande le moteur d'entraînement (2) en fonction d'un signal de différence (D), qui dépend d'une valeur réelle de position (LI) fournie par le capteur de position (3) et d'une valeur de consigne de position (LS), qui dépend de la valeur (PW) d'enfoncement de la pédale fournie par une unité de détection (6), pendant le fonctionnement du moteur à combustion interne,
- un organe de réglage de la vitesse de rotation de ralenti, qui dépend, lors du fonctionnement au ralenti du moteur à combustion interne, d'une valeur du ralenti (LW), que forment des moyens (5) de réglage de la vitesse de rotation, en fonction de la différence entre la valeur (N) de la vitesse de rotation et une valeur de consigne (NS) de la vitesse de rotation du ralenti, et
- des moyens de commande (7), qui établissent une discrimination entre le fonctionnement avec déplacement et le fonctionnement au ralenti du moteur à combustion interne,
caractérisé par le fait
- que le moteur d'entraînement est un moteur pas-à-pas (2), dont le vecteur du champ est commandé selon des pas grossiers et des pas fins,
- que la transition entre la commande selon des pas grossiers et la commande selon des pas fins dépend de la valeur du signal de différence (D),
- que le papillon des gaz (12) est également utilisé comme organe de réglage pour le fonctionnement au ralenti et est monté directement sur l'arbre (21) du moteur pas-à-pas (2),
- que la valeur de consigne de position (LS) pour le circuit de régulation de charge (2,3,4) dépend, lors du fonctionnement au ralenti, de la valeur du ralenti (LW) des moyens (5) de réglage de la vitesse de rotation, dans lequel
- le signal de différence (D) est présent sous forme numérique avec G chiffres approchés et F chiffres précis,
- dans le circuit de régulation de charge (2,3,4), le nombre des pas grossiers devant être exécutés est déterminé à partir des G chiffres approchés et que le nombre des pas fins est déterminé à partir des F chiffres précis,
- le capteur de position (3) fournit une valeur réelle numérique de position (LI) comportant G chiffres approchés, G étant choisi de manière que la valeur du dernier chiffre -le chiffre LSB de poids le plus faible- soit modifiée pendant chaque pas grossier du moteur pas-à-pas, et
- le vecteur champ est décalé d'un pas grossier par le circuit de régulation de position (2,3,4), par chaque modification de valeur de ce type.

2. Dispositif suivant la revendication 1, caractérisé par le fait que le capteur de position (3) et le moteur pas-à-pas (2) sont accouplés de manière qu'il existe un écart angulaire entre la position du rotor (20) et le moteur pas-à-pas (2) lors d'une modification de la valeur du chiffre LSB de la valeur réelle de position (LI) et la position voisine d'accrochage d'un pas grossier.

3. Dispositif suivant la revendication 2, caractérisé par le fait que l'écart angulaire est égal à la moitié d'un pas grossier.

4. Dispositif suivant la revendication 3, caractérisé par le fait que le moteur pas-à-pas (2) est réalisé en formant un moteur à deux phases avec une largeur de pas complet de 1,8° et que la valeur d'un pas grossier est égale à 0,45° et celle d'un pas fin à 0,2°.

5. Dispositif suivant la revendication 1, caractérisé par le fait
que la valeur de ralenti (LW) délivrée par les moyens (5) de réglage de la vitesse de rotation est égale à la somme d'une valeur de consigne de ralenti (LLS) et d'une valeur de réglage (RW), et
que la valeur de réglage (RW) dépend de l'intégrale de la différence entre la valeur (N) de la vitesse de rotation et de la valeur de consigne (NS) de la vitesse de rotation du ralenti.

6. Dispositif suivant la revendication 5, caractérisé par le fait que la partie intégrale de la valeur de réglage (RW) est réglée à zéro respectivement lors du passage du fonctionnement avec déplacement au fonctionnement au ralenti.

7. Dispositif suivant la revendication 5, caractérisé par le fait que la dernière valeur réelle de position (LI) est mémorisée en tant que valeur de consigne du ralenti (LSS) respectivement lors du passage du fonctionnement de ralenti au fonctionnement avec déplacement.

8. Dispositif suivant la revendication 1, caractérisé par le fait que l'exécution de chaque pas grossier est contrôlée et qu'une rotation du vecteur champ est déclenché pour l'ouverture d'un papillon des gaz, dont l'actionnement est dur.
